# EUROPÄISCHE PATENTANMELDUNG

(11) **EP 3 693 070 A1**
(43) Veröffentlichungstag der Anmeldung: **12.08.2020**
(21) Anmeldenummer: 20154350.1
(22) Anmeldetag: 29.01.2020
(51) Int. Cl.: A63G 13/04, A63G 19/00, A63H 13/02, A63H 3/46

(54) **GELENK UND SPIELGERÄT MIT MINDESTENS EINEM SOLCHEN GELENK**

(30) Priorität: 05.02.2019 CH 1332019
(71) Anmelder: Straintec AG, 8820 Wädenswil (CH)
(72) Erfinder: Ryffel, Martin, 8820 Wädenswil (CH)
(74) Vertreter: Naiu, Radu Mircea

(57) **Zusammenfassung**

Ein Gelenk (1) für zwei zu verbindende Glieder (3) umfasst ein zentrales Rohr (4), dass im gespannten Zustand des Gelenks (1) dieselbe Achse (x) wie diejenige der Glieder (3) hat und zentrisch in einer stirnseitigen Ausnehmung (4b) jedes Glieds (3) hineinragt. Das zentrale Rohr (4) ist mit einem Spiel in der Ausnehmung (4b) aufgenommen, so dass das zugehörige Glied (3) gegenüber dem zentralen Rohr (4) kippbar ist. Die Stirnseite (8) jedes Glieds (3) ist in einem Gelenkkopf aufgenommen, so dass ein Mantelbereich des Glieds (3) von einer lateralen Aussenwand (5a) des Gelenkkopfes umgeben ist, wobei der Gelenkkopf zwei Abdeckstücke (5) für die gelenkseitige Stirnseite (8) jedes Glieds (3) umfasst. Jedes Glied (3) ist im zugeordneten Abdeckstück (5) kippbar und bewirkt beim Kippen auch ein Kippen des zentralen Rohrs (4) zusammen mit den Abdeckstücken (5). Die lateralen Aussenwände (5a) der Abdeckstücke (5) haben eine derartige Ausdehnung in Achsialrichtung (x), dass sie im Maximalwinkel (a) im gekippten Zustand des Glieds (3) in einem Spreizbereich (9b) einen durch das Kippen entstehenden Spalt (7) zwischen den Stirnseiten (3a) der Glieder (3) zusammen vollkommen abdecken.

## Beschreibung

### Hinweis auf verwandte Dokumente

Dieses Dokument beansprucht die Priorität der Schweizerischen Patentanmeldung Nr. 0133/19, eingereicht am 5. Februar 2019, deren gesamten Inhalt hiermit durch Bezug aufgenommen wird.

### Gebiet der Erfindung

Die Erfindung betrifft ein Gelenk für zwei zu verbindende Glieder und ein Spielgerät für einen Spielplatz gemäss dem jeweiligen unabhängigen Anspruch.

### Hintergrund

Wackelfiguren stellen häufig Tiere oder Personen, mitunter Pflanzen oder Bauten dar und sind meist aus Holz, selten aus Kunststoff gefertigt. Das gesamte Spielzeug ist typisch etwa 10 cm hoch. Die lotrecht oder leicht schräg stehenden Stützstrukturen, z.B. die Beine des Tiers, sind aus Segmenten aufgebaut, die wie die anderen Körperteile von federgespannten Schnüren, auf denen sie aufgefädelt sind, in Position gehalten werden. Ein Bein oder Hals wird aus je etwa 2 bis 6 aufgefädelten zylindrischen bis kugelförmigen Segmenten gebildet, deren plane Endflächen unter dem Schnurzug eine lineare Streckung des Körperelements bewirken. Durch Drücken eines unten im Sockel der Wackelfigur vorgesehenen kleinen Druckknopfes mit dem Daumen gegen den Druck der eingebauten Feder können die Schnüre entspannt werden, wodurch die Schwerkraft der einzelnen Segmenten ein Einknicken, Hinlegen oder Umfallen der Figur bewirkt. Lässt man den Druckknopf los oder vermindert man den Daumendruck auf den Druckknopf, so spannt die Feder die Schnüre wieder an, wodurch sich die Wackelfigur aufrichtet bzw. teilweise aufrichtet.

Die hier beschriebenen Wackelfiguren sind lebensgrosse Figuren, die auf einem Spielplatz aufgestellt und von einer bis mehreren Personen bespielt werden können. Offensichtlich ist hier ein anderes Funktionsprinzip notwendig, da die Betätigung per Daumendruck aufgrund der Ausmasse und damit des Gewichts der Figur nicht möglich ist. Der unterseitige Druckknopf der kleinen Wackelfiguren wurde in einer bekannten Lösung durch mehrere Hebel an der Aussenseite des Sockels als Verbindungen zu den Seilzügen ersetzt. So können eine oder mehrere Personen die Hebel betätigen (nach unten drücken) und damit die Figur unterschiedlich einknicken lassen.

Anders als bei den bekannten kleinen Figuren entsteht bei den grossen Wackelfiguren im Bereich des Gelenks zwischen zwei Glieder beim Kippen ein Spalt der die Gefahr von Verletzungen, z.B. Einquetschen eines Fingers, birgt. Diese Gefahr ist besonders hoch in diesem Anwendungsfall, da die Spielfigur hauptsächlich für Kinder bestimmt ist.

### Darstellung der Erfindung

Aufgabe der Erfindung ist daher ein Gelenk bzw. ein Spielgerät bereitzustellen, das höheren Anforderungen bezüglich Sicherheit genügt.

Die Aufgabe wird in einem ersten Aspekt der Erfindung mittels eines Gelenks für zwei zu verbindende Glieder gelöst. Dabei haben die Glieder in einem gespannten Zustand im Wesentlichen dieselbe Achse und sind von einer in Achsialrichtung wirkenden Spannkraft zueinander gerade gehalten. Das Gelenk erlaubt ein Kippen eines Glieds gegenüber dem anderen Glied bis zu einem vorbestimmten Maximalwinkel, wenn die Spannkraft unter einem Schwellenwert absinkt. Das Gelenk umfasst ein zentrales Rohr, dass im gespannten Zustand dieselbe Achse wie diejenige der Glieder hat und zentrisch in einer stirnseitigen Ausnehmung jedes Glieds hineinragt. Das zentrale Rohr ist mit einem Spiel in der Ausnehmung aufgenommen, so dass der zugehörige Glied gegenüber dem zentralen Rohr kippbar ist. Die gelenkseitige Stirnseite jedes Glieds ist in einem Gelenkkopf aufgenommen, so dass ein Mantelbereich des Glieds von einer lateralen Aussenwand des zugehörigen Gelenkkopfes umgeben ist. Der Gelenkkopf umfasst zwei Abdeckstücke für die gelenkseitige Stirnseite jedes Glieds. Jedes Glied ist im zugeordneten Abdeckstück bis zu einem Maximalwinkel kippbar und bewirkt beim Kippen auch ein Kippen des zentralen Rohrs zusammen mit den Abdeckstücken. Die lateralen Aussenwände der Abdeckstücke haben eine derartige Ausdehnung in Achsialrichtung, dass sie im Maximalwinkel im gekippten Zustand des Glieds in einem Spreizbereich einen durch das Kippen entstehenden Spalt zwischen den Stirnseiten der Glieder zusammen vollkommen abdecken.

Ein zweiter Aspekt der Erfindung befasst sich mit einem Spielgerät für einen Spielplatz, umfassend einen Hauptkörper und mehrere aus Segmenten bestehenden Extremitätselemente die mit dem Hauptkörper verbunden sind. Dabei sind alle Verbindungspunkte zwischen den Segmenten und/oder zwischen einem Segment und dem Hauptkörper jeweils mit einem Gelenk nach dem ersten Aspekt der Erfindung realisiert. Das Spielgerät ist über mindestens zwei als Stützelemente ausgestaltete Extremitätselemente auf einer Unterlage abgestützt.

In einer bevorzugten Ausführungsform des Spielgeräts ist mindestens ein Seil vorgesehen, das die in Achsialrichtung wirkende Spannkraft durch die Gelenke des Spielgeräts bereitstellt. Das Seil ist durch mindestens einem Teil der Extremitätselemente hindurch geführt, derart dass die Enden des Seils durch die Unterlage hindurch an einem unter der Unterlage angeordneten Befestigungselement befestigt sind.

### Kurze Beschreibung der Zeichnungen

Weitere Ausgestaltungen, Vorteile und Anwendungen der Erfindung ergeben sich aus den abhängigen Ansprüchen und aus der nun folgenden Beschreibung anhand der Figuren. Dabei zeigen:
Fig. 1 eine laterale Schnittansicht einer ersten Ausführungsform eines erfindungsgemässen Gelenks in gespanntem Zustand,
Fig. 2 eine laterale Schnittansicht des erfindungsgemässen Gelenks aus Fig. 1 in gekipptem Zustand,
Fig. 3 eine laterale Schnittansicht einer zweiten Ausführungsform eines erfindungsgemässen Gelenks in gespanntem Zustand,
Fig. 4 eine laterale Schnittansicht des erfindungsgemässen Gelenks aus Fig. 3 in gekipptem Zustand und
Fig. 5 eine perspektivische Ansicht eines erfindungsgemässem Spielgeräts mit Gelenken gemäss Fig. 1 und 2 bzw. 3 und 4.

### Wege zur Ausführung der Erfindung

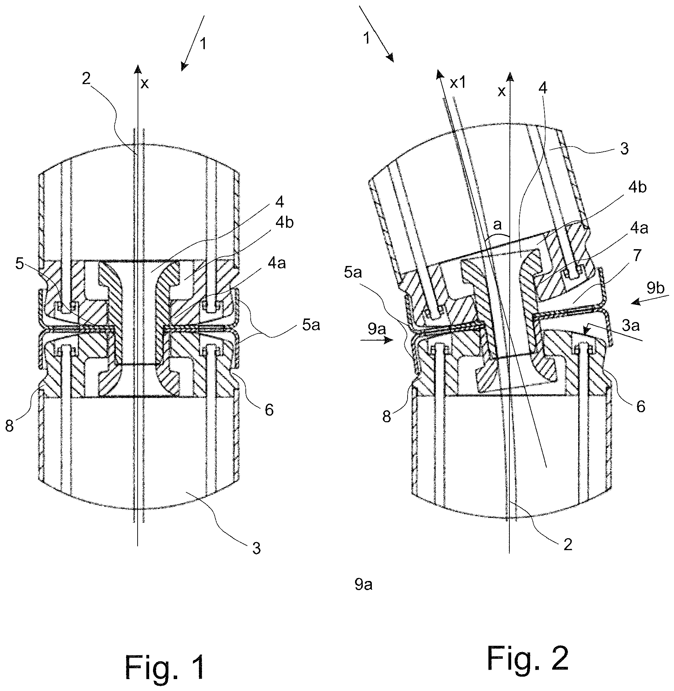

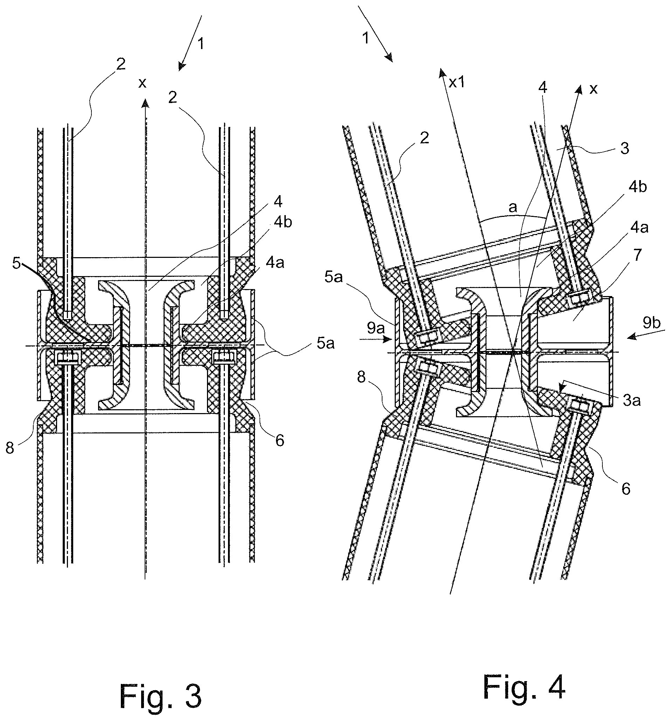

**Fig. 1** zeigt eine laterale Schnittansicht eines erfindungsgemässen Gelenks 1 in gespanntem Zustand und **Fig. 2** zeigt eine laterale Schnittansicht des erfindungsgemässen Gelenks aus Fig. 1 in gekipptem Zustand. Wie erwähnt verbindet das Gelenk 1 zwei Glieder 3. Im gespannten Zustand haben die Glieder 3 im Wesentlichen dieselbe Achse x und sind von einer in Achsialrichtung x wirkenden Spannkraft zueinander gerade gehalten. Das Gelenk 1 erlaubt ein Kippen des oberen Glieds gegenüber dem unteren Glied bis zu einem vorbestimmten Maximalwinkel a, wenn die Spannkraft unter einem Schwellenwert absinkt. Die Spannkraft ist durch ein Seil 2 gegeben, das in Zusammenhang mit Fig. 3 näher erläutert wird.

Das Gelenk umfasst ein zentrales Rohr 4, dass im gespannten Zustand dieselbe Achse x wie diejenige der Glieder 3 hat und zentrisch in einer stirnseitigen Ausnehmung 4b jedes Glieds 3 hineinragt. Das zentrale Rohr 4 ist mit einem Spiel in der Ausnehmung 4b aufgenommen, so dass das zugehörige Glied 3 gegenüber dem zentralen Rohr 4 kippbar ist. Die Ausnehmung 4b ist vorzugsweise so geformt, dass das zentrale Rohr darin gehalten wird, ohne herauszufallen. Wie man in Fig. 2 sieht, kann das obere Glied aufgrund des Spiels gegenüber dem Rohr 4 gekippt werden. Ab einem bestimmten Winkel, der proportional zum Spiel zwischen der Aussenwand des Rohrs 4 und der Innenwand des zylindrischen Vorsprungs 4a, der als Lager für das Rohr 4 dient, wird bei weiterem Kippen das Rohr 4 "mitgenommen", so dass es selbst kippt (vgl. Fig. 2). Das Kippen kann bis zu einem Maximalwinkel a zwischen der Achse x und der Kippachse x1 des oberen Glieds fortgeführt werden.

Die gelenkseitige Stirnseite 8 jedes Glieds 3 ist in einem Abdeckstück 5 aufgenommen, so dass ein Mantelbereich des Glieds 3 von einer lateralen Aussenwand 5a des zugehörigen Abdeckstücks 5 umgeben ist. Als Mantelbereich wird im Rahmen des vorliegenden Dokuments die zylindrische Aussenfläche des Glieds ohne die Fläche 3a der Stirnseiten 8 angesehen. Selbstverständlich kann dieser Mantelbereich eine andere Form als zylindrisch haben. Die Abdeckstücke 5 sind fest miteinander verbunden und an der Aussenwand des zentralen Rohrs 4 fixiert.

Die lateralen Aussenwände 5a der Abdeckstücke 5 haben eine derartige Ausdehnung in Achsialrichtung x, dass sie zusammen im Maximalwinkel a im gekippten Zustand des Glieds 3 in einem Spreizbereich 9b einen durch das Kippen entstehenden Spalt 7 zwischen den Stirnseiten 8 der Glieder 3 vollkommen abdecken, was in Fig. 2 am Pfeil 9b illustriert ist. Der Spreizbereich wird hier als der Bereich verstanden, in dem die Glieder beim Kippen auseinander gehen. Er geht in einen Quetschbereich oder Stauchbereich 9a über, in dem sich die Glieder 3 beim Kippen aufeinander zubewegen.

Jedes Glied 3 weist im Mantelbereich eine umfängliche Vertiefung 6 auf, die im Quetschbereich 9a gegenüber dem Spreizbereich 9b die laterale Aussenwand 5a des Abdeckstücks 5 im gekippten Zustand des zugehörigen Glieds 3 aufnehmen kann. Das ist in Fig. 2 an der Referenznummer 8 illustriert.

Die lateralen Aussenwände 5a der Abdeckstücke 5 sind im Mantelbereich des jeweiligen Glieds 3 vorzugsweise eingelassen, derart dass sie im gespannten Zustand des Gelenks 1 im Wesentlichen bündig mit dem Mantelbereich sind, was in Fig. 1 sichtbar ist. Dadurch wird das Verletzungspotential weiter reduziert, indem ein Spalt auch an den Extremitäten der Aussenwände 5a vermieden wird.

Die Stirnseite 8 des Glieds 3, bzw. die Fläche 3a ist nach aussen hin konvex, so dass sie auf einer stirnseitigen Stützfläche des zugehörigen Abdeckstücks 5 abrollen kann. Dies ist für sanftes Abrollen des Glieds 3 vorteilhaft. Alternativ kann die Stirnseite des Glieds 3 aber auch flach sein.

Dadurch dass die Abdeckstücke 5, die hier jeweils die Form eines liegenden L haben, miteinander und mit dem Rohr 4 verbunden sind, werden sie beim Kippen des oberen Glieds 3 vom Rohr 4 gezwungen, auch zu kippen. Dabei entstehen die Quetschzone 9a und die Spreizzone 9b. Umgekehrt kann es je nach Ausmasse des Rohrs 4 sein, dass beim Kippen die Mantelfläche des oberen Glieds 3 zuerst die laterale Aussenwand 5a des oberen Abdeckstücks mitnimmt, mit anderen Worten dass auf der Seite der Quetschzone 9a das freie Ende der lateralen Wand 5a in die Vertiefung 6 wandert und an der Mantelfläche anschlägt, wodurch das Rohr 4 anschliessend auch zum Kippen gezwungen ist. Da die beiden jeweils zu einem Glied 3 zugeordneten Abdeckstücke 5 fest miteinander verbunden sind, kippt natürlich auch das untere Abdeckstück 5 und sein freies Ende wandert auch in die dafür vorgesehene Vertiefung 6. Auf der Seite der Spreizzone 9b gehen die Glieder auseinander, was zu einem Spalt 7 führt. Dieser Spalt 7 ist aber beim Kippen durch die Länge (in x-Richtung) der lateralen Wände 5a der beiden Abdeckstücke 5 nach aussen hin abgedeckt.

Dadurch dass der Spalt 7 von den lateralen Wänden 5a abgedeckt ist, besteht nicht mehr die Gefahr der Verletzung der Bedienperson, z. B. ein Einklemmen der Finger, wenn das obere Glied 3 zurück in den gespannten Zustand des Gelenks 1 gebracht wird und der Spalt 7 kleiner wird.

**Fig. 3** zeigt eine laterale Schnittansicht einer ersten Ausführungsform eines erfindungsgemässen Gelenks 1 in gespanntem Zustand und **Fig. 4** zeigt eine laterale Schnittansicht des erfindungsgemässen Gelenks aus Fig. 1 in gekipptem Zustand.

Mit den genannten Vorteilen der ersten Ausführungsform des Gelenks 1 unterscheidet sich die zweite Ausführungsform von der ersten Ausführungsform darin dass mindestens Kernteile der Abdeckstücke 5 einstückig sind. Im hier dargestellten Beispiel sind die Kernteile vorzugsweise einstückig mit dem zentralen Rohr 4. Hier ist ferner ein Bereich der lateralen Aussenwände 5a an den Kernteilen befestigbar und kann abgenommen werden. Der Vorteil darin ist dass dieser Teil auf einfache Weise ersetzt werden kann, ohne das gesamte Gelenk demontieren zu müssen. Dieses Merkmal ist auch für die erste Ausführungsform möglich, bei der der Gelenkkopf zwei individuelle Abdeckstücke 5 für jedes Glied 3 umfasst, die fest miteinander verbunden und an einer Aussenwand des zentralen Rohrs 4 fixiert sind.

Weiter ist bei beiden Ausführungsformen des Gelenks die Stirnseite 8 des Glieds 3 eine am Glied abnehmbar befestigbare Hülse. Vorteilhafterweise kann dadurch die beim Gebrauch des Gelenks 1 besonders starken Kräften ausgesetzte Stirnseite komplett ausgetauscht werden, wobei der Hauptkörper des Glieds behalten wird. Das ist insbesondere bei der Anwendung des erfindungsgemässen Gelenks als Spielgerät vorteilhaft, da der Hauptkörper des Glieds meist kunstvoll bemalt oder geformt ist und daher nicht so leicht ersetzbar. Dadurch ist es auch möglich, ein gesamtes Gelenk 1 mit zwei Gelenkköpfen zu ersetzen.

In einer hier nicht gezeigten Ausführungsform kann das zentrale Rohr aus zwei Hälften bestehen, die mit Befestigungsmittel wie Schrauben miteinander verbindbar sind, was die Positionierung in bzw. Entnahme aus der Ausnehmung 4b erleichtert. Allerdings ist es auch möglich, das zentrale Rohr 4 einmalig in die Ausnehmung einzubringen, wonach das zentrale Rohr 4 nicht mehr entnehmbar ist, z.B. wenn nur der Austausch des gesamten Gelenks vorgesehen ist.

Die erfindungsgemässen Gelenke 1 haben vorteilhafterweise durch die oben erläuterte Bauweise mehrere Freiheitsgrade für die Einstellung des Kippverhaltens. Das o.g. Spiel zwischen Rohr 4 und Vorsprung 4a und/oder die Tiefe der Vertiefung 6 können variiert werden, um ein mehr oder minder grösseres Kippen des Oberen Glieds 3 zu bewirken.

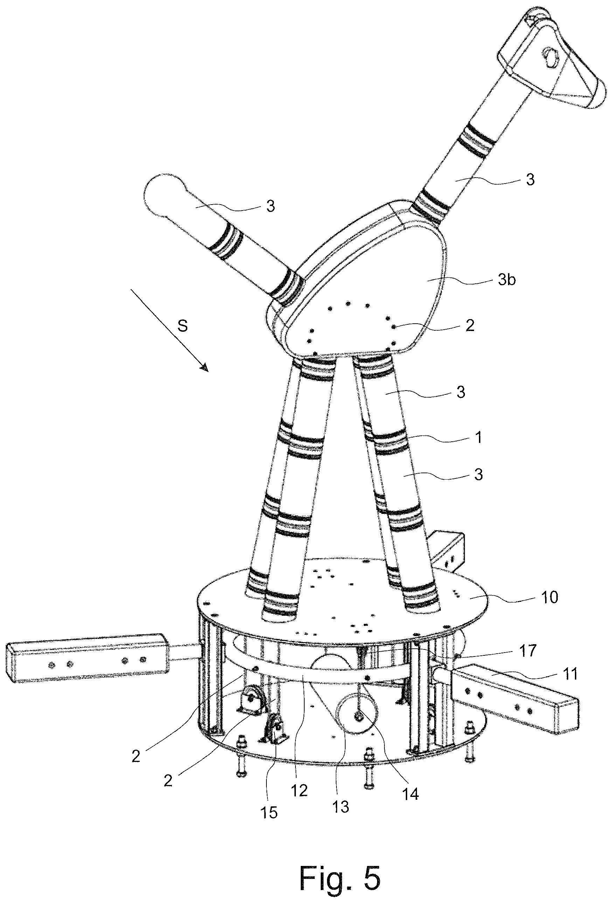

**Fig. 5** zeigt eine perspektivische Ansicht eines erfindungsgemässem Spielgeräts S mit Gelenken gemäss Fig. 1 und 2 oder 3 und 4. Hier handelt es sich beispielhaft um eine Giraffe S. Es können jedoch eine Vielzahl anderer Figuren zum Einsatz kommen.

Wie in der Figur ersichtlich, ist die Giraffe S über vier als Stützelemente ausgestaltete Extremitätselemente (ihre Beine) auf einer Unterlage 10 abgestützt. Die beweglichen Teile wie Beine, Hals, Schwanz sind aus mehreren zylindrischen Gliedern 3 zusammengesetzt und der nicht bewegliche Körper ist aus einem einzigen Segment 3b gestaltet. Die Glieder 3 sind mittels Gelenken 1 gemäss dem ersten Aspekt der Erfindung zusammengehalten. Für die Gelenke 1 könnten auch kugelförmige oder anders geformte Glieder 3 zum Einsatz kommen. Auch ist es möglich, unterschiedlich geformte Glieder 3 in einem Gelenk 1 zu verbinden, beispielsweise ein Bein mit dem Hauptkörper. Ein zentrisch durch die Glieder 3 verlaufendes Seil 2 streckt die einzelnen Glieder 3 unter Zugkraft des Seils 2 und knickt die Glieder oder Segmente 3 durch ihr Eigengewicht beim Entspannen des Seilzugs entsprechend der kleinen bekannten Wackelfiguren ein.

Die durch die Beine verlaufenden Seile 2 sind von oben in der Unterlage 10 geführt. Im Inneren dieser sockelartigen Unterlage 10 ist ein Befestigungselement 12, hier ein Ring, für die Befestigung der Seile 2 vorgesehen. Die Seile 2 sind jeweils über mindestens eine Umlenkrolle 15 mit dem Ring 12 verbunden. Ausserdem trägt der Ring 12 ein Spannelement 13, vorzugsweise ein Gewicht oder eine Feder, mittels eines Spannseils 14 über Umlenkrollen 17. Das Gewicht 13 hängt am Ring 12 frei verschiebbar, wobei es die Spannkraft durch die Gelenke 1 bereitstellt. In Ruhezustand der Giraffe S, also ohne fremde Krafteinwirkung auf das oder die Seile 2, sind alle Glieder 3 im gespannten Zustand.

Weiter umfasst die Giraffe S mehrere Betätigungshebel 11 die mit dem Ring 12 an verschiedenen Stellen entlang dessen Umfang gekoppelt sind, derart dass bei Betätigung eines Betätigungshebels 11 der Ring in Richtung des Betätigungshebel 11 kippt. Dadurch entspannt sich das Seil das dem Betätigungshebel am nächsten ist, so dass eine Spannkraft in mindestens einem Seilstrang abnimmt und dadurch die Spannkraft in mindestens einem zugeordneten Gelenk 11 des Seilstrangs abnimmt. Dadurch kippt mindestens ein Glied 3 dieser Gelenke 1. Dabei wird das Gewicht über mindestens eine seiner Halterungsrollen auf der Seite des betätigten Befestigungshebels 11 angehoben und geht in seine Ruhelage zurück, wenn der Betätigungshebel losgelassen wird.

Im vorliegenden Beispiel sind mehrere Seile vorgesehen. Das in der Zeichnungsebene vorderste Seil 2 ist mit einem Ende am Ring 12 befestigt, verläuft dann über die Rolle 15 durch das Hinterbein, den Hauptkörper (siehe gepunktete Linie) und das Vorderbein. Anschliessend tritt das Seil 2 wieder in die Unterlage 10 ein und wird über eine weitere Rolle 15 am zweiten freien Ende auch am Ring 12 befestigt. Ein weiteres Seil 2 ist für die anderen zwei Beine genauso geführt. Ein weiteres Seil 2 ist für den Schwanz und den Kopf vorgesehen. Es wird angemerkt, dass auch mehrere Seile 2 durch ein oder mehrere Beine der Giraffe, und somit durch die entsprechenden Gelenke, verlaufen können, je nach Komplexität der Wackelfigur und der "Gliedgruppen" der Wackelfigur. Dies ist in Fig. 3 und 4 beispielhaft für zwei Seile 2 dargestellt.

Wie erwähnt werden durch Kippbewegungen des Rings die Seile unterschiedlich entspannt und die Giraffe macht entsprechende Bewegungen. Es kann dabei ein Betätigungshebel oder es können gleichzeitig mehrere Betätigungshebel vorgesehen sein. Mit den Umlenkrollen 15 der Seile 2 kann die Bewegungsrichtung der Betätigungshebel 11 bei Bedarf umgekehrt werden, so dass die Giraffe entspannt wird, wenn die Betätigungshebel 11 nach unten gedrückt werden. Nach Loslassen des Betätigungshebels 11 ist der Ruhezustand (gespannter Zustand) mittels einer Verschiebung des Gewichts 13 in seine Ruhelage wiederherstellbar.

Obwohl bevorzugte Ausführungsformen der Erfindung beschrieben worden sind wird darauf hingewiesen, dass die Erfindung auf anderen Weisen im Rahmen der nachfolgenden Ansprüchen realisiert werden kann. Dabei beziehen sich in der Beschreibung verwendete Begriffe wie "bevorzugt", "insbesondere", "vorteilhaft", etc. nur auf optionale und beispielhafte Ausführungsformen.

## Patentansprüche

1. Gelenk (1) für zwei zu verbindende Glieder (3), wobei die Glieder (3)in einem gespannten Zustand im Wesentlichen dieselbe Achse (x) haben und von einer in Achsialrichtung (x) wirkenden Spannkraft zueinander gerade gehalten sind, wobei das Gelenk (1) ein Kippen eines Glieds (3) gegenüber dem anderen Glied (3) bis zu einem vorbestimmten Maximalwinkel (a) erlaubt, wenn die Spannkraft unter einem Schwellenwert absinkt,
wobei das Gelenk (1) ein zentrales Rohr (4) umfasst, dass im gespannten Zustand dieselbe Achse (x) wie diejenige der Glieder (3) hat und zentrisch in einer stirnseitigen Ausnehmung (4b) jedes Glieds (3) hineinragt, wobei das zentrale Rohr (4) mit einem Spiel in der Ausnehmung (4b) aufgenommen ist, so dass das zugehörige Glied (3) gegenüber dem zentralen Rohr (4) kippbar ist,
wobei die gelenkseitige Stirnseite (8) jedes Glieds (3) in einem Gelenkkopf aufgenommen ist, so dass ein Mantelbereich des Glieds (3) von einer lateralen Aussenwand (5a) des Gelenkkopfes umgeben ist, wobei der Gelenkkopf zwei Abdeckstücke (5) für die gelenkseitige Stirnseite (8) jedes Glieds (3) umfasst, wobei jedes Glied (3) im zugeordneten Abdeckstück (5) kippbar ist und beim Kippen auch ein Kippen des zentralen Rohrs (4) zusammen mit den Abdeckstücken (5) bewirkt,
wobei die lateralen Aussenwände (5a) der Abdeckstücke (5) eine derartige Ausdehnung in Achsialrichtung (x) haben, dass sie im Maximalwinkel (a) im gekippten Zustand des Glieds (3) in einem Spreizbereich (9b) einen durch das Kippen entstehenden Spalt (7) zwischen den Stirnseiten (8) der Glieder (3) zusammen vollkommen abdecken.

2. Gelenk nach Anspruch 1, wobei jedes Glied (3) im Mantelbereich eine umfängliche Vertiefung (6) aufweist, die in einem Quetschbereich (9a) gegenüber dem Spreizbereich (9b) die laterale Aussenwand (5a) des Abdeckstücks (5) im gekippten Zustand des zugehörigen Glieds (3) aufnehmen kann.

3. Gelenk nach Anspruch 1 oder 2, wobei die lateralen Aussenwände (5a) der Abdeckstücke (5) im Mantelbereich des jeweiligen Glieds (3) eingelassen sind, derart dass sie im gespannten Zustand im Wesentlichen bündig mit dem Mantelbereich sind.

4. Gelenk nach einem der vorangehenden Ansprüche, wobei die Stirnfläche (3a) der Stirnseite (8) des Glieds (3) nach aussen hin konvex ist, so dass sie auf einer stirnseitigen Stützfläche des zugehörigen Abdeckstücks (5) abrollen kann, oder wobei die Stirnfläche (3a) der Stirnseite (8) des Glieds (3) flach ist.

5. Gelenk nach einem der vorangehenden Ansprüche, wobei die Stirnseite (8) des Glieds (3) eine am Glied abnehmbar befestigbare Hülse ist.

6. Gelenk nach einem der vorangehenden Ansprüche, wobei mindestens Kernteile der Abdeckstücke (5) einstückig sind, insbesondere einstückig mit dem zentralen Rohr (4) sind, insbesondere wobei ein Bereich der lateralen Aussenwände (5a) an den Kernteilen abnehmbar befestigbar ist.

7. Gelenk nach einem der Ansprüche 1 bis 5, wobei der Gelenkkopf zwei individuelle Abdeckstücke (5) für jedes Glied (3) umfasst, die fest miteinander verbunden und an einer Aussenwand des zentralen Rohrs (4) fixiert sind.

8. Spielgerät (S) für einen Spielplatz, umfassend einen Hauptkörper (3b) und mehrere aus Segmenten (3) bestehenden Extremitätselemente die mit dem Hauptkörper (3b) verbunden sind, wobei alle Verbindungspunkte zwischen den Segmenten (3) und/oder zwischen einem Segment (3) und dem Hauptkörper (3b) jeweils mit einem Gelenk (1) nach einem den vorangehenden Ansprüche realisiert sind, wobei das Spielgerät (S) über mindestens zwei als Stützelemente ausgestaltete Extremitätselemente auf einer Unterlage (10) abgestützt ist.

9. Spielgerät nach Anspruch 8, wobei mindestens ein Seil (2), das die in Achsialrichtung (x) wirkenden Spannkraft durch die Gelenke (1) des Spielgeräts (S) bereitstellt, durch mindestens einem Teil der Extremitätselemente hindurch geführt ist, derart dass die Enden des Seils (2) durch die Unterlage (10) hindurch an einem unter der Unterlage (10) angeordneten Befestigungselement (12), insbesondere einem Ring, befestigt sind.

10. Spielgerät nach Anspruch 9, wobei das mindestens eine Seil (2) über eine Umlenkrolle (15) mit dem Befestigungselement (12) verbunden ist.

11. Spielgerät nach Anspruch 9 oder 10, wobei das Befestigungselement (12) ein unter der Unterlage (10) angeordnetes Spannelement (13), insbesondere ein Gewicht oder eine Feder, mittels eines Spannseils (14) über Umlenkrollen (17) trägt, wobei das Spannelement (13) am Befestigungselement (12) frei verschiebbar hängt, wobei das Gewicht des Spannelements (13) die Spannkraft durch die Gelenke (1) bereitstellt, wobei in Ruhezustand des Spielgeräts (S) alle Glieder (3) im gespannten Zustand sind.

12. Spielgerät nach einem der Ansprüche 9 bis 11, weiter umfassend mehrere Betätigungshebel (11) die mit dem Befestigungselement (12) an verschiedenen Stellen gekoppelt sind, derart dass bei Betätigung eines Betätigungshebels (11) das Befestigungselement (12) in Richtung des Betätigungshebels (11) kippt, so dass eine Spannkraft in mindestens einem Seilstrang (2) abnimmt und dadurch die Spannkraft in mindestens einem zugeordneten Gelenk (1) des Seilstrangs (2) abnimmt, so dass mindestens ein Glied (3) dieser Gelenke (1) kippt.

13. Spielgerät nach Anspruch 11 und 12, wobei nach Loslassen des Betätigungshebels (11) der Ruhezustand mittels einer Verschiebung des Spannelements (13) in seine Ruhelage wiederherstellbar ist.
